# EUROPÄISCHE PATENTSCHRIFT

(11) **EP 2 624 037 B1**
(45) Veröffentlichungstag und Bekanntmachung des Hinweises auf die Patenterteilung: **10.04.2024**
(21) Anmeldenummer: 13153451.3
(22) Anmeldetag: 31.01.2013
(51) Int. Cl.: G02B 6/44, H02G 15/04

(54) **Mehrfachabdichtungskappe für Rohre und Rohrverbunde und insbesondere Lichtwellenleitkabelrohrverbunde**
Multiple sealing cap for tubes and tube combinations, in particular fibre optic cable tube combinations
Clapet d'étanchéification multiple pour tuyaux et faisceaux tubulaires et en particulier faisceaux tubulaires de câbles de fibres optiques

(30) Priorität: 02.02.2012 DE 202012001037 U; 19.04.2012 DE 102012103460
(43) Veröffentlichungstag der Anmeldung: 07.08.2013
(73) Patentinhaber: Stark, Elena, 85247 Schwabhausen (DE)
(72) Erfinder: Stark, Elena, 85247 Schwabhausen (DE)
(74) Vertreter: Wittmann, Ernst-Ulrich

(56) Entgegenhaltungen:
- EP-A1- 0 812 993
- DE-A1- 1 640 700
- DE-A1- 4 324 878
- DE-U- 7 102 846
- FR-A1- 2 512 597
- JP-A- H04 302 705
- US-A- 2 327 831
- US-A- 5 472 302
- US-A1- 2011 280 525

## Beschreibung

Die vorliegende Erfindung betrifft Mehrfachabdichtungskappen für Rohre und Rohrverbunde, insbesondere Lichtwellenleitkabelrohrverbunde.

Mehrfachabdichtungskappen für Rohre und Rohrverbunde, insbesondere Lichtwellenleitkabelrohrverbunde sind im Stand der Technik bekannt. Die derzeit eingesetzten Abdichtungskappen für Rohrverbunde sind kosten- und montageintensiv und gewährleisten teilweise nicht die notwendige Dichtigkeit, die technologisch erforderlich ist. Auch die mehrfache Verwendungsmöglichkeit ist derzeit mit den vorhandenen Maßnahmen nicht gegeben.

FR 251 2597 betrifft eine Vorrichtung zum Ziehen eines Kabels in ein Rohr, die eine Kappe mit Stirnseite, Seitenwänden und einen Zentrierdorn mit selbstschneidendem Außengewinde im inneren der Kappe umfasst, der an einem Zugring befestigt werden kann, und axial in einem Bündel von Leitern aufgenommen werden kann, wobei diese Leiter zwischen dem mit Vorsprüngen versehenen Teil des Stifts und einer äußeren Bindung zusammengedrückt werden, so dass das Bündel dann zumindest teilweise die Zugkraft aufnehmen kann, die zum Ausführen des Ziehens des Kabels in dem Rohr erforderlich ist.

DE 1640700 betrifft eine Zugvorrichtung für ein Kabel mit Dorn, der mit Quervorsprüngen oder Rippen versehen ist und an einem Zugring befestigt ist, und damit in dem Kabel verankert werden kann.

DE 7102846 U betrifft eine kraftschlüssige Verbindung eines Zughakens mit dem Ende eines Kunststoffmantel versehenen elektrischen Kabels, vorzugsweise eines vielpaarigen Fernsprechkabels. Derartige Kabel, insbesondere die sogenannten Ortskabel, werden bestehenden Kabelkanälen verlegt, welche Mittels Zugseilen eingezogen werden.

US 232 7831 betrifft ebenfalls eine Zugvorrichtung für ein Kabel.

US 2011 0280 525 bezieht sich auf eine Kabelmuffe mit seitlicher Inspektionsöffnung.

EP 081 2993 betrifft eine Baugruppe mit einer Schraube und einer Mutter. Die Baugruppe hat einen Schraubenhohlraum in Längsrichtung und einen Vorsprung aus der Mutter, der in den Schraubenhohlraum eindringt, wenn die Mutter auf das Schraubenende aufgeschraubt wird. Der Vorsprung aus der Mutter endet im Bereich des Schraubenkopfes und weist an seinem der Mutter abgewandten Ende einen Kopf auf. Zwischen dem Kopf an dem von der Mutter abgewandten Ende des Vorsprungs und der Schraube ist eine Spannschraube angebracht, die die Schraube und die Mutter gegeneinander verspannt. Der Vorsprung hat auch an seinem Ende im Bereich der Mutter einen Kopf, der zumindest vor dem Verschrauben von Mutter und Schraube die Kraft der Feder auf die Mutter überträgt. Die Baugruppe ist als mechanische Auslösevorrichtung in einen Federspeicherzylinder mit einer Speicherfeder eingebaut. Die Schraube ist axial im Zylindergehäuse fixiert, aber von außen drehbar.

JPH04302705 betrifft das Problem, dass beim Einschrauben einer Schraube in einen so genannten Sacklochgewindebohrer, der in einem nicht durchgehenden Loch vorgesehen ist, die Schraube auf den Boden aufschlägt und die Befestigung von zwei oder mehr Gegenständen unmöglich macht. Die JPH04302705 betrifft eine Schraube, mit der dies verhindert werden kann und die sich leicht auf ihre sichere Befestigung überprüfen lässt.

US 5472302 und DE 4324878 betreffen eine Schraubensicherung mit einer optischen Funktionsanzeige.

Aufgabe der vorliegenden Erfindung ist es eine Mehrfachabdichtungskappe für Rohre und Rohrverbunde, insbesondere Lichtwellenleitkabelrohrverbunde bereit zu stellen, welche die im Stand der Technik bekannten Probleme wenigstens teilweise reduziert und insbesondere eine einfach zu bedienende und zuverlässige Abdeckkappe bereit stellt.

Gelöst wird diese Aufgabe durch eine Mehrfachabdichtungskappe gemäß Anspruch 1. Bevorzugte Ausgestaltungsformen der Mehrfachabdichtkappe sind Gegenstand der Unteransprüche.

Als selbstscheidendes Gewinde wird gemäß der hier vorliegenden Erfindung ein außen angeordnetes Gewinde am Zentnerdorn verstanden, welches selbst ein entsprechendes Gewinde in einer Ausnehmung bzw. einem im wesentlichen kreisrunden Loch bildet, ohne jedoch einen Span zu produzieren.

Der Zentrierdorn ist gemäß der vorliegenden Erfindung mit der Innenseite der Stirnseite des Basiskunststoffkörpers verbunden und das selbstscheidende Gewinde ist im inneren Volumen des Basiskunststoffkörpers angeordnet.

Innerhalb des Basiskunststoffkörpers ist eine Dichtung angeordnet, welche u.a. eine vorzugsweise zentrierte Öffnung aufweist, durch welche sich der Zentrierdorn erstreckt. Diese Öffnung kann eng, insbesondere dichtend an dem Zentnerdorn anliegen, oder aber auch gemäß einer weiteren bevorzugten Ausführungsform so dimensioniert sein, dass ein vorgegebener Abschnitt einer Rohrwandung bzw. eines Rohrs hierin aufnehmbar ist. Die Höhe bzw. die Stärke der Dichtung kann sehr unterschiedlich ausgebildet sein, so dass diese vollständig oder aber auch nur teilweise innerhalb des Volumens des Basiskunststoffkörpers aufgenommen ist. Die Dichtung weist ferner gemäß einer weiteren Ausführungsform eine Dichtlippe auf.

Die Dichtung ist bevorzugt aus wenigstens einem Elastomer hergestellt, welches aus einer Gruppe ausgewählt wird, welche thermoplastisches Elastomer (TPE),

Butylkautschuk, Polysulfid, Silikon, Polyurethan, MS-Polymer, silanmodifizierter Polymere, Butyldichtstoffe, Lösemittelhaltige Dichtstoffe, Dispersionsdichtstoffe, Pressfaser, Aramidfaser, Kohlefaser, Mineralfaser, Metalle wie zum Beispiel Kupfer oder Messing, flexible Metalldichtungen, ummantelte Flachdichtungen, Polytetrafluorethylen, Kombinationen hiervon und dergleichen umfasst.

Der Zentrierdorn weist in einer weiteren Ausführungsform eine Zentnerspitze und/oder zur Innenseite der Stirnseite des Basiskunststoffkörpers einen Sperrsockel auf, welcher ein zu tiefes Einschrauben insbesondere in einen Kabelverbund verhindert. Dies kann ein Anschlag in Form eines Vorsprungs oder dergleichen sein.

Offenbarungsgemäß weist die Mehrfachabdichtungskappe eine Montageanzeige auf, welche insbesondere den ordnungsgemäßen Sitz der Mehrfachabdichtungskappe auf einem Rohr bzw. einem Rohrverbund anzeigt. Dies ist eine auf der Innenseite des Basiskunststoffköpers angeordnete Scheibe, welche auf der der Innenseite des Basiskunststoffköpers zugewandte Signaldorne aufweist und durch das Eindrehen des Zentnerdorns in ein Rohr bei ausreichendem Kontakt mit der Dichtung verschoben wird. Zur Führung dieser Scheibe kann diese zusätzlich mit Vorsprüngen versehen sein, welche in Nuten geführt werden und ordnungsgemäß parallel zur Stirnseite verschoben werden. Dies ist dann wichtig, wenn eine gleichmäßige Anpressung der Dichtung auf die Rohrenden bewirkt werden soll.

Gemäß einer besonders bevorzugten Ausführungsform sind auf der Scheibe eine Vielzahl von Signaldornen über die Fläche angeordnet, so dass je nach Durchdringungstiefe der Stirnseite für den Benutzer sofort deutlich wird, in wie weit eine gleichmäßige Anpressung der Dichtung erzielt wurde. Treten die Signalstifte ungleichmäßig durch die Öffnungen an der Stirnseite, ist eine gleichmäßige Anpressung beispielsweise aufgrund einer Schieflage nicht gewährleistet.

Gemäß einer weiteren besonders bevorzugten Ausführungsform kann die Position der Scheibe mit den Signaldornen von der Stirnseite weggerichtet vorgespannt - beispielsweise durch eine Feder - sein und/oder die Gleitfähigkeit der Scheibe durch den Zusatz eines Schmiermittels verbessert werden.

Der Basiskunststoffköper kann vollständig oder auch nur anteilig aus Kunststoff, vorzugsweise im Spritzgussverfahren gefertigt sein, wobei hierzu wenigstens witterungsbeständige und hochschlagfeste Materialien verwendet werden. Solche

Materialien, die einzeln oder in Kombination verwendet werden können, sind beispielsweise Acrylester-Styrol-Acrylnitrii, Acrylnitril-Butadien-Styrol, Acrylnitril/ Methylmethacrylat, Acrylnitril/Butadien/Acrylat, Acrylnitril/chloriertes Polyethylen/Styrol, Butadien-Kautschuk, Butylkautschuk, Casein-Kunststoffe, Kunsthorn, Celluloseacetat, Cellulosehydrat, Cellulosenitrat, Chitin, Chitosan, Chloropren-Kautschuk, Cyclo-Olefin-Copolymere, Epoxidharz, Ethylen-Ethylacrylat-Copolymer, Ethylen-Propylen-Copolymer, Ethylen-Propylen-Dien- Kautschuk, Ethylenvinylacetat, Fluorkautschuk, Flüssigkristall-Polymere, Harnstoff-Formaldehydharz, High Impact Polystyrene, Isopren-Kautschuk, Lignin, MelaminFormaldehydharz, Melamin/Phenol- Formaldehyd, Methylacrylat/Butadien/ Styrol, Naturkautschuk (Gummi arabicum), Perfluoralkoxylalkan, Phenol-Formaldehydharz, Polyacrylnitril, Polyamid, Polyacetal (POM), Polybutylensuccinat, Polybutylenterephthalat, Polycaprolacton, Polycarbonat, Polychlortrifluorethylen, Polyester, Polyesteramid, Polyether-Block-Amid, Polyetherimid, Polyetherketone, Polyethersulfon, Polyethylen, Polyethylenterephthalat, Polyhydroxyalkanoate, Polyhydroxybutyrat, Polyimid, Polyisobutylen, Polylactid (Polymilchsäure), Polymethacrylmethylimid, Polymethylenterephthalat, Polymethylmethacrylat, Polymethylpenten, Polyoxymethylen oder Polyacetal, Polyphenylenether, Polyphenylensulfid, Polyphthalamid, Polypropylen, Polypyrrol, Polystyrol, Polystyrol geschäumt, Polystyrol schlagfest, Polysulfon, Polytetrafluorethylen, Polyurethan, Polyvinylacetat, Polyvinylbutyral, Polyvinylchlorid (Hart-PVC), Polyvinylchlorid (Weich-PVC), Polyvinylidenfluorid, Polyvinylpyrrolidon, Silicon-Kautschuk, Styrol-Acrylnitril- Copolymerisat, Styrol-Butadien-Kautschuk, Styrol-Butadien-Styrol, Thermoplastische Stärke, Thermoplastisches Polyurethan, Ungesättigter Polyester, Vinylchlorid/ Ethylen/ Methacrylat, Vinylchlorid/Ethylen, Verbundwerkstoffe wie zum Beispiel Kunststoff-Metall-Werkstoffe, faserverstärkte Kunststoffe, Kombinationen hiervon und dergleichen.

Der Basiskunststoffköper weist eine Sichtöffnung auf, welche an den Seitenwandungen oder aber auch an der Stirnseite angeordnet ist und dazu dient, die zusätzlich oder in Alleinstellung die Lage und Ausrichtung der Dichtung zu überprüfen.

Der Basiskunststoffköper weist ferner auf der Außenseite Montagehilfselemente auf, die es ermöglichen die Mehrfachabdichtungskappe händisch oder mit Werkzeugen zu befestigen bzw. ein Drehmoment zu übertragen. Dies können beispielsweise Schlüsselausnehmungen oder aber auch einfache Rillungen, Kanten, Stege oder dergleichen sein.

Die Aufgabe der vorliegenden Erfindung wird auch durch ein Verfahren zur Montage der zuvor beschriebenen Mehrfachabdichtungskappe gelöst, bei welchem nach dem Einführen des Zentnerdorns in ein freies Lumen eines Rohrs bis zum Anschlag des selbstschneidenden Gewindes das Eindrehen des Zentnerdorns und des selbstschneidenden Gewindes in dem Rohr und das anschließende Abdichten eines Rohrs oder eines Rohrverbundes durch Anpressen der Dichtung auf wenigstens einen Rohrendabschnitt oder einer Vielzahl von Rohrendabschnitten als Verfahrensschritte bestimmt sind. Gemäß einem weiteren Verfahrensschritt erfolgt die Aufpressung der Dichtung, welche innerhalb des Basiskunststoffköpers angeordnet ist soweit, bis die Montageanzeige der Mehrfachabdichtungskappe sichtbar und/oder tastbar wird. Hiermit kann dann sowohl die ausreichende Anpressung der Dichtung auf das Rohrende bzw. die Rohrenden überprüft werden, als auch die Gleichmäßigkeit der entsprechenden Anpressung über die Fläche.

Die Erfindung wird nachfolgend anhand verschiedener Beispiele beschrieben.

### Dabei zeigen:

Figur 1 eine erste Mehrfachabdichtungskappe;
Figur 2 eine Dichtung für die Mehrfachabdichtungskappe
Figur 3 die auf ein Lichtwellenleitkabelrohrverbund aufgebrachte Mehrfachabdichtungskappe;
Figur 4 die Mehrfachabdichtungskappe nach Figur 1 in einer anderen perspektivischen Ansicht;
Figuren 5 und 6 jeweils eine Aufsicht auf unterschiedliche ausgeformte Lichtwellenleitkabelrohrverbunde,
Figur 7 die Mehrfachabdichtungskappe nach Figur 1 in einer weiteren perspektivischen Ansicht;
Figuren 8a bis 8d eine zweite Ausführungsform der Mehrfachabdichtungskappe;
Figuren 9 und 10 eine dritte Mehrfachabdichtungskappe.

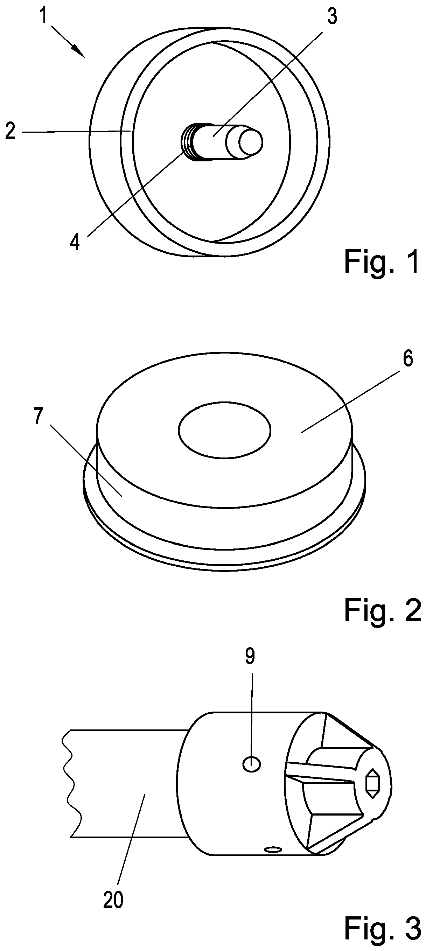

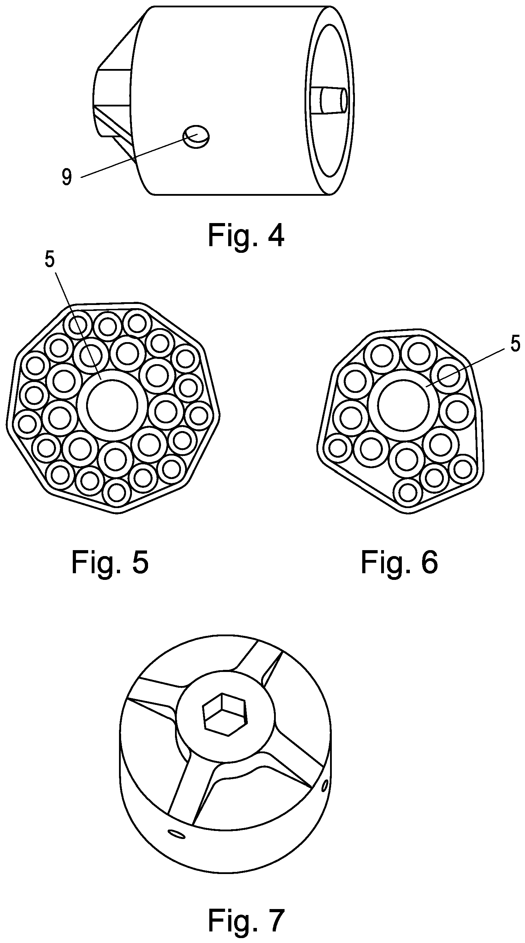

Figur 1 zeigt eine erste Mehrfachabdichtungskappe, welche Abdichtungskappen wie sie dem Stand der Technik für Kabelrohrverbunde insbesondere Lichtwellenleitkabelrohrverbunde, mit Versteifungsinnenrohr (Fig. 5) sowie Sechsfachkabelverbunde (siehe Fig. 6) bekannt sind, ersetzen kann. Dabei bietet die Mehrfachabdichtungskappe eine einfache Handhabung beim Verschließen von entsprechenden Kabelverbunden, um insbesondere das Eindringen von Wasser und Schmutzpartikeln zu verhindern.

Es handelt sich hierbei um einen Basiskunststoffkörper 2 aus einem speziellen witterungsbeständigen und hochschlagfesten Material. Zureinfachen Handhabung am abzudichtenden Kabelverbund ist mittig ein Zentrierdorn 3 im Kunststoffteil integriert der mit einem selbstschneidenden Gewinde 4 ausgestattet ist, der wie in den Figuren 5 und 6 dargestellt beispielsweise in ein mittig liegendes Versteifungsinnenrohr 5 eingeführt und dort verschraubt wird. Die Verschraubung kann manuell per Hand oder manuell mit einem Sechskantschraubschlüssel oder mit einem Akkuschraubgerät mit Sechskantaufsatz erfolgen (siehe Figur 7 "Sechskantschraubeinsatz"). Am Ende des Zentrierdornes befindet sich ein Sperrsockel der das zu tiefe einschrauben in den Kabelverbund verhindern soll (siehe Figur 3 in der Anwendung). In den Basiskörper wird eine spezielle Dichtung 7 aus flexiblem Material eingelegt (siehe Figur 2 "Dichtung"). Hierbei handelt es sich für solche Anwendungen um eine Dichtung aus geeignetem Elastomer, welche beispielsweise als Spritzteil gefertigt wird. Ausgestattet ist das Dichtungsteil mit eigens für den Anwendungsfall entwickelten Dichtungslippen 6, die den anfallenden Drücken standhalten müssen. Das gesamte Produkt ist bevorzugt Witterungs- und UV beständig nach, sowie Öl-, Benzol und Säure beständig. Eine Dichtigkeit nach Schutzklasse IP 68 ist erreichbar, sofern der Kabelverbund gemäß den gültigen Verbauvorschriften beispielsweise der Stadtwerke München, gerade geschnitten wird. Dadurch kann ebenfalls die Druckdichtigkeit bis 0,5 bar gewährleistet werden. Die Dichtung des Teiles ist so konstruiert, dass Überdruck, der durch eventuell falsches Einblasen entsteht, nach außen abgegeben wird, die Druckdichtigkeit über 0,5 bar ist danach wieder gewährleistet. Um ein hohes Maß an Sicherheit in der Verwendung zu gewährleisten, sind seitlich am Teil Sichtöffnungen 9 eingebracht (siehe Figur 3 und 4). Damit kann ohne weiteren Aufwand überprüft werden, ob bei der Anwendung auch die Dichtung in der Kappe integriert ist, dies ist gerade in der Wiederverwendung des Teiles von Relevanz. Das Produkt ist wieder verwendbar, vor der Wiederverwendung muss die Mehrfachabdichtkappe von Verschmutzungen gereinigt werden.

In den Figuren 3 und 4 sind Sichtöffnungen 9 als Durchbrüche seitlich zu erkennen, die dazu dienen prüfen zu können, ob die Dichtung nach dem Verschrauben auch komplett anliegt oder überhaupt montiert ist.

Die Sichtöffnung (9) dient somit dazu, ein hohes Maß an Sicherheit in der Verwendung zu gewährleisten. Die Sichtöffnung dient der Überprüfung - ohne weiteren Aufwand -, ob bei der Anwendung auch die Dichtung in der Abdichtungskappe integriert ist, was auch bei der Wiederverwendung des betreffenden Teiles von Relevanz ist.

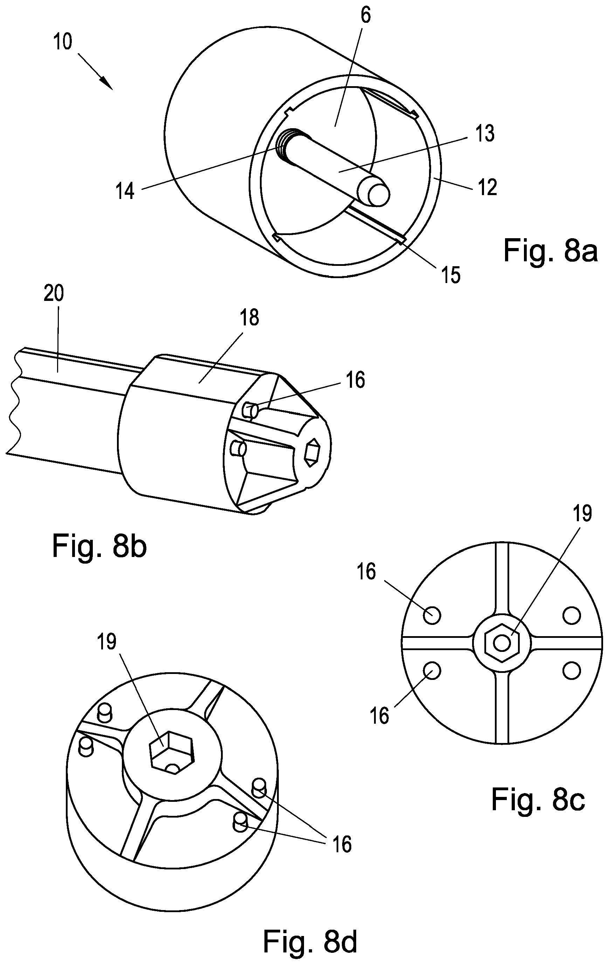

Die Figuren 8a bis 8d zeigen eine zweite Mehrfachabdichtungskappe 10. Die Figur 8a zeigt das Ausführungsbeispiel mit eingelegter Dichtung 6, im Innenbereich des Teiles also auf der Fläche in der die Dichtung nach unten gleitet, sind hier symmetrisch vier bis nach unten durchgängige Nuten 15 eingebracht. Unterhalb der Dichtung befindet sich eine vorzugsweise farbliche Kunststoffbeilagscheibe die durch entsprechende Rastnasen in den Nuten 15 nach oben oder unten gleiten kann. Oberhalb der Scheibe befinden sich vier Kunststoffdorne 16. Im verbauten Zustand bewirkt die Beilagscheibe das bei richtiger Montage die Dichtung 6 nach hinten gedrückt wird, die Scheibe ebenfalls, die vier Dorne 16 oben aus den Öffnungen herauskommen und man dadurch kontrollieren kann, ob Mehrfachabdichtkappe 10 korrekt montiert wurde. Die Kunststoffdorne 16, die an der Beilagscheibe angebracht sind, ragen dann aus den Öffnungen und sind vorzugsweise bei einer entsprechenden Einfärbung gut zu erkennen. Bei Verschmutzung kann man die Dorne auch fühlen, da diese leicht erhaben aus dem Deckel ragen. Um die Flexibilität der Ausführungsform noch zu erweitern ist mittig des Teiles ein Gewindedorn angeordnet.

Dieser ist beispielsweise aus Kunststoff gebildet. Für andere Möglichkeiten könnte dies auch ein kunststoff umspritztes Metallgewinde sein. Dies bedeutet, dass bei einer anderen Ausführungsform mit jedoch denselben Eigenschaften eine Metallschraube in das Kunststoffwerkzeug eingelegt wird und dann oben umspritzt wird. Damit ergibt sich die Möglichkeit das Produkt auch auf andere Kabelrohrverbunde aufzusetzen. Nachfolgend wird die Montage dieser Mehrfachabdichtungskappe nach Figur 8a bis 8d beschrieben:
1. Arbeitsschritt: Abschneiden des Rohrs, der Rohre oder des Kabelrohrverbundes. Um die Dichtigkeit zu gewährleisten ist es zwingend notwendig, dass die Endstücke im liegenden Zustand geschnitten werden. Ein Schneiden in angehobener Position führt dazu, dass die einzelnen Rohre des Verbundes beim Ablegen unterschiedliche Längen haben, damit ist die Dichtigkeit nicht mehr zu gewährleisten. Des Weiteren ist darauf zu achten, dass möglichst gerade geschnitten wird.
2. Arbeitsschritt: Einführen des Zentrierdorn der Transportabdichtkappe in das beispielsweise im Rohrverbund innenliegende Versteifungsrohr und Eindrücken der Transportabdichtkappe bis zum Anschlag des Gewindes welches sich am Zentrierdorn der Abdeckkappe befindet;
3. Arbeitsschritt: Drehen der Abdeckkappe im Uhrzeigersinn (rechts) auf das Versteifungsrohr des Kabelverbundes. Das Gewinde ist selbstschneidend und verankert sich während dem Aufdrehen selbständig in der Wandstärke des Versteifungsrohres. Drehen der Abdeckkappe bis zum Anschlag auf das Versteifungsrohr des Kabelrohrverbundes. An den außenliegenden Seitenwänden sind gleichmäßig auf die Oberfläche eingebrachte Rillen, die beim manuellen Verschrauben für die notwendige Kraftübertragung sorgen. Auf dem Deckel der Abdeckkappe ist ebenfalls ein Sechskant eingebracht der, sofern die manuelle Verschraubung zu aufwändig ist, mit einem Sechskantschraubschlüssel oder einem Akkuschrauber aufgesetzt werden kann.
4. Arbeitsschritt: Überprüfung der korrekten Aufschraubung: Sobald die Abdeckkappe bis zum Anschlag des Gewindes aufgeschraubt wurde, erscheinen auf dem Deckel vier rote Kontrollzapfen (Figuren 8b bis 8d) die beispielsweise ca. 3-4 mm hervortreten. Damit wird der korrekte Sitz der Abdeckkappe angezeigt. Um den richtigen Sitz der Abdeckkappe zu prüfen, müssen mind, zwei der Kontrollzapfen diagonal zueinander hervortreten (wie Figur 8d).

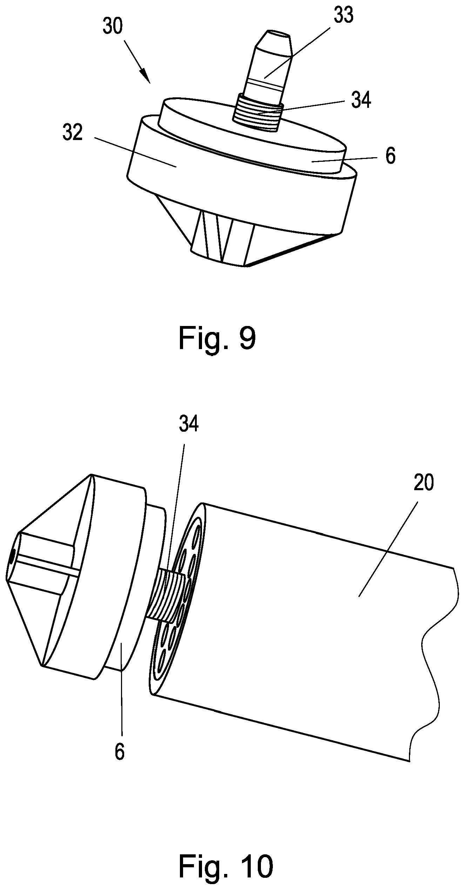

Die Figuren 9 und 10 zeigen eine weitere Mehrfachabdichtungskappe. Bei dieser Transportabdeckkappe handelt es sich um ein Produkt, welches vorzugsweise zur Abdeckung von 24er oder 12er sowie von 06er oder 03er Kabelrohrverbunde mit zentralem Versteifungsinnenrohr bei Transport oder Lagerung eingesetzt werden kann. Das hochschlagfeste Produkt mit eingesetzter Dichtung ermöglicht bei richtiger Handhabung eine Dichtigkeit gegen Spritz- oder Regenwasser oder gegen das Eindringen von Staub oder Schmutzpartikeln. Bei entsprechender Behandlung kann die Transportabdeckkappe mehrfach wiederverwendet werden.

Nachfolgend wird die Montage dieser Mehrfachabdichtungskappe nach Figur 9 und 10 beschrieben:
Um die Dichtmöglichkeiten des Produktes optimal zu nutzen sollte das Endstück gemäß beispielsweise den Kundenvorschriften SWM möglichst gerade geschnitten sein.
1. Arbeitsschritt: Abschneiden des Kabelrohrverbundes.
2. Arbeitsschritt: Einführen des Zentrierdorn der Transportabdichtkappe in das im Rohrverbund innenliegende Versteifungsrohr und Eindrücken der Transportabdichtkappe bis zum Anschlag des Gewindes das sich am Zentnerdorn der Abdeckkappe befindet (siehe Figur 10).
3. Arbeitsschritt: Drehen der Transportabdichtkappe im Uhrzeigersinn (rechts) auf das Versteifungsrohr des Kabelverbundes. Das Gewinde ist selbstschneidend und verankert sich währende dem Aufdrehen selbständig in der Wandstärke des Versteifungsrohres. Drehen Sie die Abdeckkappe bis zum Anschlag auf das Versteifungsrohr des Kabelrohrverbundes. Auf dem Deckel der Transportabdichtkappe ist ebenfalls ein Sechskant eingebracht der, sofern die manuelle Verschraubung zu aufwändig ist, kann die Mehrfachabdichtungskappe mit einem Sechskantschraubschlüssel oder einem Akkuschrauber aufgesetzt werden.

Es liegt selbstverständlich im Sinn der vorliegenden Erfindung und den hier beschriebenen Ausführungsformen, dass diese mit unterschiedlichen Durchmessern und insbesondere auch mit unterschiedlichen Dichtungsstärken verwendet und eingesetzt werden können. Es liegt ferner auch im Sinn der vorliegenden Erfindung, dass die Erfindung wie hier beschrieben auch auf den Einsatz von Einzelrohren Verwendung findet und ferner die Zusatzmöglichkeit vorgesehen ist, dass Gewindeänderungen vorzugsweise für den Einsatz in Metall berücksichtigt werden können.

## Patentansprüche

1. Mehrfachabdichtungskappe (1, 10, 30) zur Verwendung mit einem Lichtwellenleitkabelrohrverbundes (1) für ein Abdichten des Lichtwellenleitkabelrohrverbundes (1), wobei der Lichtwellenleitkabelrohrverbund (1) ein Versteifungsinnenrohr (5) aufweist und wenigstens teilweise durch die Mehrfachabdichtungskappe (1, 10, 30) aufgenommen wird, und wobei die Mehrfachabdichtungskappe einen Basiskunststoffkörper (2, 12, 32) mit einer Stirnseite und einer Seitenwandung aufweist, innerhalb welcher wenigstens abschnittsweise ein Zentrierdorn (3, 13, 33) angeordnet ist, der wenigstens in einem Abschnitt ein selbstschneidendes Außengewinde (4, 14, 34) aufweist, wobei das selbstschneidende Außengewinde (4, 14, 34) im inneren Volumen des Basiskunststoffkörpers angeordnet ist, wobei in dem Basiskunststoffkörper (2, 12, 32) eine Sichtöffnung (9) angeordnet ist und eine Dichtung (6) eingelegt ist, welche wenigstens abschnittsweise den Zentrierdorn (3, 13, 33) umgibt und wobei der Zentrierdorn (3, 13, 33) in einer Öffnung der Dichtung (6) aufgenommen ist, und wobei zwischen der Dichtung (6) und der Stirnseite des Basiskunststoffkörpers (2, 12, 32) eine Beilagscheibe oder Zwischenplatte zur Vergleichsmäßigung der Anpresskraft der Dichtung vorgesehen ist, und wobei auf dem Zentrierdorn ein Abschnitt eines Versteifungsinnenrohrs (5) des Rohrverbundes aufgenommen werden kann
**dadurch gekennzeichnet, dass**
die Mehrfachabdichtungskappe eine Montageanzeige umfassend wenigstens einen Signaldorn (16) oberhalb der Beilagscheibe aufweist, der nach Montage der Abdichtkappe an der Stirnseite des Basiskunststoffkörpers (2, 12 32) durch wenigstens eine hierin vorgesehene Öffnung visuell sichtbar und/oder tastbar hindurch dringt.

2. Mehrfachabdichtungskappe nach Anspruch 1, **dadurch gekennzeichnet, dass** die Dichtung (6) aus wenigstens einem Material, vorzugsweise einem Elastomer hergestellt werden, welches aus einer Gruppe ausgewählt wird, welche thermoplastischem Elastomer (TPE), Butylkautschuk, Polysulfid, Silikon, Polyurethan, MS-Polymer, silanmodifizierter Polymere, Butyldichtstoffe, Lösemittelhaltige Dichtstoffe, Dispersionsdichtstoffe, Pressfaser, Aramidfaser, Kohlefaser, Mineralfaser, Metalle wie zum Beispiel Kupfer oder Messing, flexible Metalldichtungen, ummantelte Flachdichtungen, Polytetrafluorethylen und Kombinationen hiervon umfasst.

3. Mehrfachabdichtungskappe nach Anspruch 1 oder 2, **dadurch gekennzeichnet, dass** die Dichtung (6) eine Dichtungslippe (7) aufweist.

4. Mehrfachabdichtungskappe nach einem der vorstehenden Ansprüche, **dadurch gekennzeichnet, dass** am Ende des Zentrierdornes (3, 13, 33) zur Innenseite der Stirnseite ein Sperrsockel bzw. Anschlag zur Verhinderung des zu tiefen Einschraubens in den Kabelverbund angeordnet ist.

5. Mehrfachabdichtungskappe nach Anspruch 1, **dadurch gekennzeichnet, dass** die Beilagscheibe oder Zwischenplatte in dem Basiskunststoffkörpers (2, 12, 32), insbesondere in wenigstens einem Abschnitt der Seitenwand geführt wird.

6. Verfahren der Montage einer Mehrfachabdichtungskappe nach einem der vorstehenden Ansprüche zum Abdichten eines Lichtwellenleitkabelrohrverbundes (1) mit den Schritten:
- Einführen des Zentrierdorns (3, 13, 33) mit dem selbstschneidenden Außengewinde (4, 14, 34) in ein freies Lumen eines Versteifungsinnenrohr (5) des Lichtwellenleitkabelrohrverbundes (1) bis zum Anschlag des selbstschneidenden Außengewindes (4, 14, 34);
- Eindrehen des Zentrierdorns (3, 13, 33) und des selbstschneidenden Gewindes (4, 14, 34) in das Versteifungsrohr (5);
- Abdichten des Versteifungsrohrs (5) oder des Lichtwellenleitkabelrohrverbundes (1) durch Anpressen einer Dichtung (6) auf wenigstens einen Rohrendabschnitt oder einer Vielzahl von Rohrendabschnitten.

7. Verfahren nach Anspruch 6, **dadurch gekennzeichnet, dass** als weiterer Schritt das Aufpressen der Dichtung (6) soweit erfolgt, bis die Montageanzeige der Mehrfachabdichtungskappe sichtbar und/oder tastbar wird.

8. Verfahren nach einem der Ansprüche 6 oder 7, **dadurch gekennzeichnet, dass** das Versteifungsrohr (5), in welches der Zentrierdorn (3, 13, 33) eingeführt wird, im wesentlichen mittig in dem Lichtwellenleitkabelrohrverbundes angeordnet ist.

9. Verwendung einer Mehrfachabdichtungskappe gemäß einem der Ansprüche 1 bis 5 als Abdichtkappe (1, 10) für Lichtwellenleitkabelrohrverbunde mit Versteifungsrohr (5) und/oder als Transportabdeckkappe (30) für solch ein Rohr oder Rohre.

## Claims

1. Repeatable-sealing cap (1, 10, 30) for use with an optical waveguide cable conduit assembly (1) for sealing the optical waveguide cable conduit assembly (1), wherein the optical waveguide cable conduit assembly (1) has a stiffening inner conduit (5) and is at least partially received by the repeatable-sealing cap (1, 10, 30), and wherein the repeatable-sealing cap has a plastics base body (2, 12, 32) with an end face and a side wall, within which a centring mandrel (3, 13, 33), at least one portion of which has a self-tapping external thread (4, 14, 34), is at least partially arranged, wherein the self-tapping external thread (4, 14, 34) is arranged in the inner volume of the plastics base body, wherein a viewing opening (9) is arranged and a seal (6) is placed in the plastics base body (2, 12, 32), the seal at least partially surrounding the centring mandrel (3, 13, 33), and wherein the centring mandrel (3, 13, 33) is received in an opening of the seal (6), and wherein a shim or intermediate plate is provided between the seal (6) and the end face of the plastics base body (2, 12, 32) to homogenize the contact pressure of the seal, and wherein a portion of a stiffening inner conduit (5) of the conduit assembly can be received on the centring mandrel,
**characterized in that**
the repeatable-sealing cap has a mounting indicator comprising at least one signalling mandrel (16) above the shim, which signalling mandrel, after the sealing cap has been mounted on the end face of the plastics base body (2, 12, 32), passes through at least one opening provided therein so as to be visible and/or tactile.

2. Repeatable-sealing cap according to Claim 1, **characterized in that** the seal (6) is made from at least one material, preferably an elastomer, which is selected from a group comprising thermoplastic elastomer (TPE), butyl rubber, polysulfide, silicone, polyurethane, MS polymer, silane-modified polymers, butyl sealants, solvent-containing sealants, dispersion sealants, pressed fibre, aramid fibre, carbon fibre, mineral fibre, metals such as copper or brass, flexible metal seals, coated flat seals, polytetrafluoroethylene, and combinations of these.

3. Repeatable-sealing cap according to Claim 1 or 2, **characterized in that** the seal (6) has a sealing lip (7).

4. Repeatable-sealing cap according to one of the preceding claims, **characterized in that** a blocking base or stop for preventing excessively deep screwing into the cable assembly is arranged at the end of the centring mandrel (3, 13, 33) towards the inner side of the end face.

5. Repeatable-sealing cap according to Claim 1, **characterized in that** the shim or intermediate plate is guided in the plastics base body (2, 12, 32), in particular in at least one portion of the side wall.

6. Method for mounting a repeatable-sealing cap according to one of the preceding claims to seal an optical waveguide cable conduit assembly (1), having the following steps:
- introducing the centring mandrel (3, 13, 33) with the self-tapping external thread (4, 14, 34) into a free aperture of a stiffening inner conduit (5) of the optical waveguide cable conduit assembly (1) as far as the self-tapping external thread (4, 14, 34) will go;
- turning the centring mandrel (3, 13, 33) and the self-tapping thread (4, 14, 34) in the stiffening conduit (5);
- sealing the stiffening conduit (5) or the optical waveguide cable conduit assembly (1) by pressing a seal (6) onto at least one conduit end portion or a multiplicity of conduit end portions.

7. Method according to Claim 6, **characterized in that,** as a further step, the seal (6) is pressed on until the mounting indicator of the repeatable-sealing cap is visible and/or tactile.

8. Method according to either of Claims 6 and 7, **characterized in that** the stiffening conduit (5), into which the centring mandrel (3, 13, 33) is inserted, is arranged substantially in the middle of the optical waveguide cable conduit assembly.

9. Use of a repeatable-sealing cap according to one of Claims 1 to 5 as a sealing cap (1, 10) for optical waveguide cable conduit assemblies with a stiffening conduit (5), and/or as transport covering cap (30) for such a conduit or conduits.

## Revendications

1. Capuchon d'étanchéité multiple (1, 10, 30) destiné à être utilisé avec un ensemble de conduite de câble à fibres optiques (1) permettant de rendre étanche l'ensemble de conduite de câble à fibres optiques (1), dans lequel l'ensemble de conduite de câble à fibres optiques (1) présente une conduite intérieure de renfort (5) et est reçu au moins partiellement par le capuchon d'étanchéité multiple (1, 10, 30), et dans lequel le capuchon d'étanchéité multiple présente un corps de base en matière plastique (2, 12, 32) muni d'une face frontale et d'une paroi latérale à l'intérieur de laquelle est disposé au moins par endroits un mandrin de centrage (3, 13, 33) qui présente un filetage autotaraudeur (4, 14, 34) au moins dans une section, dans lequel le filetage autotaraudeur (4, 14, 34) est disposé dans le volume intérieur du corps de base en matière plastique, dans lequel un regard (9) est disposé et une garniture (6) qui entoure au moins par endroits le mandrin de centrage (3, 13, 33) est insérée dans le corps de base en matière plastique (2, 12, 32), et dans lequel le mandrin de centrage (3, 13, 33) est reçu dans une ouverture de la garniture (6), et dans lequel, entre la garniture (6) et la face frontale du corps de base en matière plastique (2, 12, 32), une rondelle de calage ou une plaque d'écartement est prévue pour égaliser la force de contact de la garniture, et dans lequel une section d'une conduite intérieure de renfort (5) de l'ensemble de conduite peut être reçue sur le mandrin de centrage,,
**caractérisé en ce que** le capuchon d'étanchéité multiple présente un indicateur de montage comprenant au moins un mandrin de signalisation (16) au-dessus de la rondelle de calage qui, après le montage du capuchon d'étanchéité sur la face frontale du corps de base en matière plastique (2, 12, 32), pénètre de manière visible et/ou palpable à travers au moins une ouverture prévue dans celui-ci.

2. Capuchon d'étanchéité multiple selon la revendication 1, **caractérisé en ce que** la garniture (6) est fabriquée à partir d'au moins un matériau, de préférence d'un élastomère, qui est sélectionné dans un groupe comprenant un élastomère thermoplastique (TPE), du caoutchouc butyle, du polysulfure, du silicone, du polyuréthane, du polymère MS, des polymères modifiés au silane, des produits d'étanchéité butyliques, des produits d'étanchéité à base de solvant, des produits d'étanchéité à dispersion, des fibres comprimées, des fibres d'aramide, des fibres de carbone, des fibres minérales, des métaux comme par exemple le cuivre ou le laiton, des joints métalliques flexibles, des garnitures plates gainées, du polytétrafluoréthylène et des combinaisons de ces éléments.

3. Capuchon d'étanchéité multiple selon la revendication 1 ou 2, **caractérisé en ce que** la garniture (6) présente une lèvre d'étanchéité (7).

4. Capuchon d'étanchéité multiple selon l'une quelconque des revendications précédentes, **caractérisé en ce qu'**un culot de retenue ou une butée pour empêcher un vissage trop profond dans l'ensemble de conduite est disposé(e) à l'extrémité du mandrin de centrage (3, 13, 33) vers la face intérieure de la face frontale.

5. Capuchon d'étanchéité multiple selon la revendication 1, **caractérisé en ce que** la rondelle de calage ou la plaque d'écartement est guidée dans le corps de base en matière plastique (2, 12, 32), en particulier dans au moins une section de la paroi latérale.

6. Procédé de montage d'un capuchon d'étanchéité multiple selon l'une quelconque des revendications précédentes permettant de rendre étanche un ensemble de conduite de câble à fibres optiques (1), comprenant les étapes consistant à :
- introduire le mandrin de centrage (3, 13, 33) pourvu du filetage autotaraudeur (4, 14, 34) dans une lumière libre d'une conduite intérieure de renfort (5) de l'ensemble de conduite de câble à fibres optiques (1) jusqu'à ce que le filetage autotaraudeur (4, 14, 34) vienne en butée ;
- visser le mandrin de centrage (3, 13, 33) et le filetage autotaraudeur (4, 14, 34) dans la conduite de renfort (5) ;
- rendre étanche la conduite de renfort (5) ou l'ensemble de conduite de câble à fibres optiques (1) en pressant une garniture (6) sur au moins une section d'extrémité de conduite ou une pluralité de sections d'extrémité de conduite.

7. Procédé selon la revendication 6, **caractérisé en ce que** comme une étape supplémentaire, le pressage de la garniture (6) est effectué jusqu'à ce que l'indicateur de montage du capuchon d'étanchéité multiple soit visible et/ou palpable.

8. Procédé selon l'une quelconque des revendications 6 ou 7, **caractérisé en ce que** la conduite de renfort (5), dans laquelle est introduit le mandrin de centrage (3, 13, 33), est disposée de manière substantiellement centrale dans l'ensemble de conduite de câble à fibres optiques.

9. Utilisation d'un capuchon d'étanchéité multiple selon l'une quelconque des revendications 1 à 5 comme capuchon d'étanchéité (1, 10) pour un ensemble de conduite de câble à fibres optiques avec une conduite de renfort (5) et/ou comme capuchon de transport (30) pour une ou plusieurs de ces conduites.
